(19) Europäisches Patentamt
European Patent Office
Office européen des brevets

(11) **EP 3 455 637 B1**

(12) **FASCICULE DE BREVET EUROPEEN**

(45) Date de publication et mention de la délivrance du brevet:
**05.02.2020 Bulletin 2020/06**

(21) Numéro de dépôt: **17722743.6**

(22) Date de dépôt: **09.05.2017**

(51) Int Cl.:
**G01P 15/097** (2006.01)

(86) Numéro de dépôt international:
**PCT/EP2017/061007**

(87) Numéro de publication internationale:
**WO 2017/194509 (16.11.2017 Gazette 2017/46)**

(54) **ACCELEROMETRE VIBRANT PRECONTRAINT**

**VORGESPANNTER VIBRIERENDER BESCHLEUNIGUNGSMESSER**

**PRESTRAINED VIBRATING ACCELEROMETER**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.05.2016 FR 1654199**

(43) Date de publication de la demande:
**20.03.2019 Bulletin 2019/12**

(73) Titulaires:
• **Centre National de la Recherche Scientifique 75016 Paris (FR)**
• **Université de Lille 1 Sciences et Technologies 59655 Villeneuve d'Ascq Cedex (FR)**

(72) Inventeurs:
• **FAUCHER, Marc 59810 LESQUIN (FR)**
• **MORELLE, Christophe 76420 BIHOREL (FR)**

(74) Mandataire: **IPAZ Parc Les Algorithmes, Bâtiment Platon CS 70003 Saint-Aubin 91192 Gif-sur-Yvette Cedex (FR)**

(56) Documents cités:
**WO-A1-2010/116061      GB-A- 2 270 198 US-A1- 2011 234 206**

• **Ralph E Hopkins: "SOA Applications and Performance Goals The Silicon Oscillating Accelerometer: A MEMS Inertial Instrument for Strategic Missile Guidance", , 7 novembre 2000 (2000-11-07), pages 44-51, XP055317509, Extrait de l'Internet: URL:http://citeseerx.ist.psu.edu/viewdoc/download?doi=10.1.1.196.4877&rep=rep1&type=pdf [extrait le 2016-11-08] cité dans la demande**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un dispositif microélectromécanique constitué au moins en partie par un matériau semi-conducteur piézoélectrique. En particulier, l'invention porte sur un accéléromètre vibrant à hautes performances et destiné à la mesure d'accélérations dans des environnements soumis à des températures élevées et/ou soumis à de fortes accélérations.

Les capteurs microélectromécaniques, ou MEMS (pour *Micro-Electro-Mechanical Systems* en anglais), ont connu un développement important dans les dernières décennies. Fabriqués à l'aide de techniques empruntées à la microélectronique, ces dispositifs comportent typiquement des éléments mécaniques de dimensions submillimétriques (poutres encastrées, membranes...), ainsi que des actionneurs pour mettre en mouvement des éléments mécaniques et/ou des capteurs pour détecter le mouvement d'éléments mécaniques. Le rôle d'un capteur MEMS est ainsi de délivrer un signal, souvent électrique, lorsqu'une sollicitation extérieure lui est appliquée.

Pour mesurer une accélération, un capteur MEMS comporte généralement une masse d'épreuve supportée par un ou plusieurs éléments flexibles. Cette masse d'épreuve se déplace sous l'effet d'une accélération, cette accélération étant mesurable par ledit capteur MEMS.

Pour disposer d'une bonne sensibilité de ce type de capteur, il est connu de rendre la masse d'épreuve solidaire d'un résonateur pour réaliser un accéléromètre vibrant. Ledit résonateur comprend par exemple une poutre vibrante encastrée d'un coté à un support fixe et de l'autre à la masse d'épreuve qui est mobile par rapport au support. Ladite poutre vibrante présente au moins un axe sensible aux accélérations selon une direction donnée. Le résonateur a la propriété d'osciller selon différents modes de résonance, ces modes de résonance étant caractérisés par un ensemble de fréquences propres. Un tel résonateur peut également comporter des transducteurs permettant un actionnement, et/ou une détection de ces modes de résonance. Lorsque le dispositif est soumis à une accélération, la masse d'épreuve subit une force inertielle. Cette force inertielle a pour effet de créer une contrainte mécanique sur le résonateur. Sous l'effet de cette contrainte mécanique, l'ensemble des fréquences propres de résonance du résonateur sont modifiées. La mesure de la variation de fréquence dudit résonateur permet de déduire la valeur de l'accélération à laquelle est soumis le dispositif.

En particulier, il est connu des accéléromètres vibrants MEMS en silicium ou en quartz. Par exemple, le document R. E. Hopkins, J. T. Borenstein, B. M. Antkowiak, P. A. Ward, R. D. Elliot, M. S. Weinberg, M. D. Depiero, and J. A. Miola, "The Silicon Oscillating Accelerometer: A MEMS Inertial Instrument for Strategic Missile Guidance," pp. 44-51, 2000, décrit des accéléromètres comprenant de tels accéléromètres vibrants, et dont le mode de vibration utilisé est le premier mode de flexion.

Cependant, il est bien connu de l'homme de métier que la performance des accéléromètres vibrants MEMS est limitée par plusieurs facteurs. En particulier, le facteur de qualité du résonateur utilisé, l'étendue de mesure de l'accélération mesurable, ou encore la résolution de tels accéléromètres vibrants ne leur permet pas toujours de fournir de bonnes performances dans les environnements sévères. Par « environnements sévères », on comprendra des environnements comportant des températures élevées, notamment 100°C à 500°C, et/ou soumis à de fortes vibrations ou accélérations, notamment 100g à 10000g, où g est l'accélération de pesanteur terrestre égale à 9.81 m/s². Par exemple, sous l'effet d'une forte accélération qui génère une contrainte en compression, la poutre que comprend le résonateur peut subir un phénomène de flambage. Une contrainte trop importante peut, en particulier, résulter en une rupture de la poutre, et donc endommager le résonateur.

De plus, les technologies d'accéléromètres vibrants MEMS utilisant des matériaux semi-conducteurs tels que le silicium, soit pour les transducteurs, soit pour une électronique intégrée, sont souvent limitées par leurs températures d'opération. Il faut noter que les technologies à base de Quartz ou Langasites/Langatates sont limitées en miniaturisation par les procédés de fabrication utilisable dans ces filières.

La présente invention vise à résoudre les inconvénients précités en modifiant l'architecture des dispositifs microélectromécaniques connus de l'état de l'art. A cet effet, l'invention propose un dispositif de mesure d'une accélération caractérisé en ce qu'il comporte un accéléromètre vibrant comprenant :

- un substrat constitué d'un matériau semi-conducteur et formant un cadre fixe dudit accéléromètre;
- une masse d'épreuve constituée d'un même matériau que ledit substrat et reliée audit cadre fixe, ladite masse d'épreuve étant apte à se déplacer en translation suivant au moins un axe sensible dudit accéléromètre vibrant;
- des moyens de guidage constitués d'un même matériau que ledit substrat, et reliés audit cadre fixe et à ladite masse d'épreuve, lesdits moyens de guidage étant aptes à guider ladite masse d'épreuve selon la direction dudit au moins un axe sensible;
- une couche constituée d'un matériau semi-conducteur piézoélectrique et déposée sur ledit substrat, ladite couche étant précontrainte en tension;
- un résonateur situé dans ladite couche et relié audit cadre fixe, ledit résonateur étant apte à subir une tension ou une compression selon la direction dudit au moins un axe sensible; et - au moins un transducteur relié audit résonateur, ledit au moins transducteur étant apte à actionner ledit résonateur, à maintenir une oscillation dudit résonateur et/ou à détecter un signal électrique généré par ledit résonateur.

Avantageusement, ledit substrat est une couche active d'un substrat de silicium sur isolant.

Avantageusement, ladite couche est réalisée en un matériau différent du substrat, en particulier un matériau nitrure de type III-N, l'élément du groupe III étant choisi parmi Al, Ga, In, B ou tout alliage de ces éléments, de préférence Ga.

Avantageusement, ledit résonateur comporte une épaisseur comprise entre 0.5 microns et 10 microns.

Avantageusement, ledit transducteur comporte une hétérostructure confinant dans ladite couche au moins un gaz bidimensionnel de porteurs de charge dans une pluralité de régions, ledit au moins un gaz bidimensionnel formant au moins un canal de conduction électrique s'étendant dans ladite couche, ledit au moins un canal de conduction électrique étant connecté électriquement à ladite couche.

Avantageusement, ledit transistor comprenant une pluralité d'électrodes situées sur ladite couche, et connectées électriquement à ladite hétérostructure.

Avantageusement, au moins une desdites électrodes dudit transistor est un contact ohmique.

Avantageusement, ledit transducteur comprend une pluralité d'électrodes, au moins deux desdites électrodes étant connectées à ladite couche et/ou à un gaz bidimensionnel de porteurs de charge.

Avantageusement, ledit résonateur comporte une pluralité de peignes inter-digités, lesdits peignes inter-digités étant connectés électriquement audit résonateur et à une pluralité d'électrodes formées sur ledit cadre fixe par une pluralité de pistes, lesdites pistes étant constituées d'un matériau en métal ou en semi-conducteur.

Avantageusement, ledit résonateur est encastré sur une partie de son périmètre et présente une forme choisie entre : - une poutre ; - une membrane ; - un disque ; et - une plaque ;

Avantageusement, ledit résonateur comporte une cavité acoustique, ladite cavité acoustique comprenant des cristaux phononiques.

D'autres caractéristiques, détails et avantages de l'invention ressortiront à la lecture de la description faite en référence aux dessins annexés donnés à titre d'exemple et qui représentent, respectivement :

- les figures 1a et 1b, respectivement, une vue en coupe et une vue en plan d'un accéléromètre vibrant précontraint selon un premier exemple de réalisation de l'invention.
- la figure 2, une vue en plan d'un accéléromètre vibrant précontraint selon un deuxième exemple de réalisation de l'invention.
- la figure 3, une vue en plan d'un accéléromètre vibrant précontraint selon un troisième exemple de réalisation de l'invention.

On remarquera ici que les figures ne sont pas à l'échelle, et que la présente invention ne se limite pas aux modes de réalisation précités.

Selon l'un ou plusieurs des modes de réalisation tels que décrits, l'invention concerne ainsi en particulier un dispositif électromécanique destiné à la mesure d'accélérations, et réalisé à partir d'une couche semi-conductrice piézoélectrique, dite couche nitrure, déposée sur un substrat de silicium. Ledit dispositif comporte une masse d'épreuve définie dans ledit substrat et apte à se déplacer suivant au moins un axe sensible sous l'effet d'une accélération, ainsi qu'un résonateur défini dans ladite couche nitrure et permettant de mesurer ladite accélération. De manière surprenante, les inventeurs ont constaté que la réalisation d'un accéléromètre vibrant comportant une telle couche nitrure précontrainte en tension affecte favorablement les performances d'un accéléromètre vibrant. En particulier, un accéléromètre selon l'un des modes de réalisation de l'invention permet d'obtenir une étendue de mesure, une résolution et un facteur de qualité accrus dans des conditions de fonctionnement variées.

De plus, les inventeurs ont constaté que la réalisation d'un accéléromètre vibrant comprenant une couche nitrure, ladite couche nitrure comportant un matériau nitrure de type III-N, par exemple du nitrure de gallium GaN, permettait de rendre plus précis la mesure d'accélérations en présence d'environnements sévères, notamment en présence de températures comprises entre 100°C et 500°C, et/ou soumis à de fortes vibrations ou accélérations comprises entre 100g et 10000g. Des performances accrues peuvent être obtenues en présence de températures et de pressions élevées.

La conception d'accéléromètres vibrants MEMS selon l'un ou plusieurs modes de réalisation de l'invention tels que décrits ci-après repose, notamment, sur l'empilement de différentes couches constituées de matériaux semi-conducteurs.

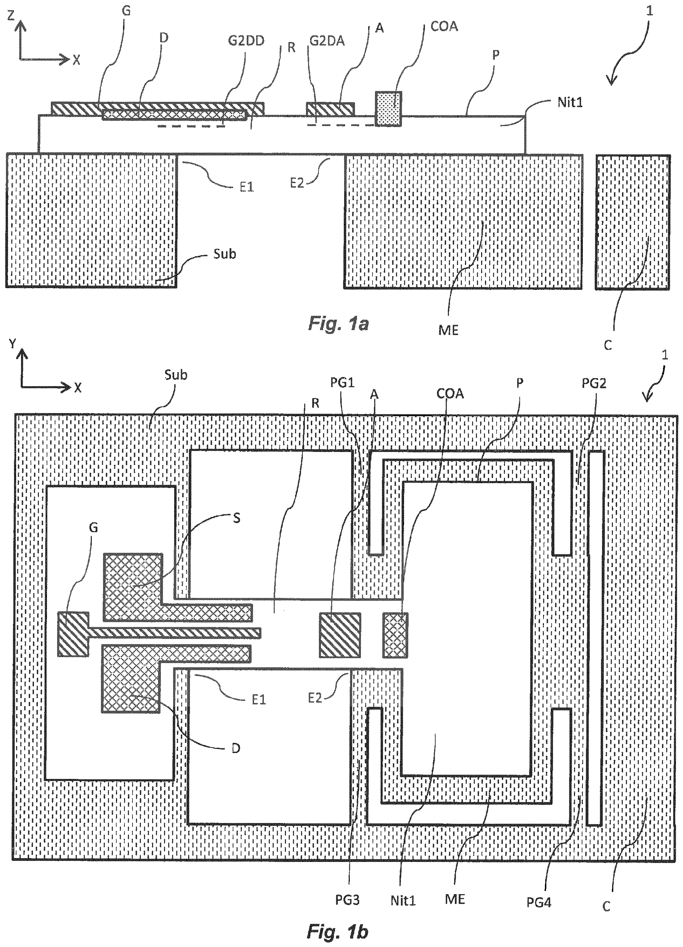

Les figures 1a et 1b montrent, respectivement, une vue en coupe et une vue en plan d'un accéléromètre vibrant 1 selon un premier exemple de réalisation de l'invention, ledit accéléromètre étant sensible aux variations d'accélération le long de la direction donnée par l'axe X. Dans la suite de la description, la direction donnée par l'axe X définira la direction dite de l'axe sensible du dispositif.

Tel que représenté, l'accéléromètre 1 comprend un empilement de couches semi-conductrices. Cet empilement de couches permet de réaliser un dispositif de mesure sensible aux contraintes mécaniques appliquées audit dispositif. Un tel empilement est réalisé à partir d'un substrat **Sub** composé d'un matériau semi-conducteur, par exemple du silicium Si ou du carbure de silicium SiC. Selon un mode de réalisation de l'invention, le substrat **Sub** est une couche active d'un substrat de silicium sur isolant (SOI). La couche **Sub** est gravée de sorte à pouvoir libérer une ou plusieurs couches semi-conductrices au-dessus de **Sub.** Ledit substrat peut-être gravé de manière physique et/ou chimique. Cette gravure peut être réalisée à partir d'un masque défini par lithographie, et/ou d'étapes de gravures par plasma. Cette gravure permet la libération desdites couches.

Selon un mode de réalisation de l'invention, le dispositif comporte une masse d'épreuve **ME** réalisée dans le substrat **Sub.** Ladite masse d'épreuve peut être réalisée par gravure profonde. Ladite masse d'épreuve est configurée pour pouvoir se déplacer en translation suivant au moins un axe sensible dudit accéléromètre vibrant.

Lors de la réalisation du dispositif, la couche **Sub** permet de libérer au moins une couche **Nit1,** dite couche nitrure. Selon un mode de réalisation de l'invention, le substrat **Sub** permet de libérer en particulier une portion de la dite couche nitrure. Selon un mode de réalisation de l'invention, ladite couche nitrure est constituée d'un matériau identique à celui constituant le substrat **Sub.** Selon un autre mode de réalisation de l'invention, la couche **Nit1** comprend un matériau différent de celui constituant le substrat **Sub.** La couche **Nit1** s'étend partiellement au-dessus de la couche **Sub** et est en contact avec celle-ci. La couche **Nit1** présente typiquement une épaisseur de quelques microns (0,5 - 10 microns, et par exemple 2 microns), tandis que la couche **Sub** est sensiblement plus épaisse (100 - 500 microns, et par exemple 270 microns). Les dimensions de l'élément suspendu dépendent des caractéristiques mécaniques souhaitées de l'accéléromètre vibrant.

La couche **Nit1** est une couche constituée d'un matériau semi-conducteur et piézoélectrique. Selon un mode de réalisation de l'invention, la couche **Nit1** peut comprendre des nitrures d'éléments III, c'est-à-dire un ou plusieurs matériaux de type III-N, l'élément du groupe III étant choisi parmi Al, Ga, In, B, ou tout alliage de ces éléments. Selon un mode de réalisation de l'invention, lesdits matériaux peuvent être dopés pour améliorer les performances électroniques du dispositif, en particulier pour réduire sa résistivité électrique, ou encore pour faciliter la réalisation de contacts permettant de connecter électriquement celui-ci au monde extérieur.

Selon un mode de réalisation de l'invention, la couche **Nit1** est avantageusement constituée de nitrure de gallium GaN. Les nitrures d'éléments III possèdent la propriété d'être à la fois des matériaux semi-conducteurs et piézoélectriques. On notera qu'un empilement selon un mode de réalisation de l'invention peut également inclure une ou plusieurs couches supplémentaires, lesdites couches comprenant de préférence les éléments précités.

Le dispositif comporte également un cadre fixe **C** réalisé en un matériau identique à celui composant principalement le substrat **Sub** et/ou la masse d'épreuve **ME.** Ledit cadre fixe permet de supporter mécaniquement la couche **Nit1** et ses différents éléments, et constitue une partie fixe de l'accéléromètre **1.** La masse d'épreuve **ME** est reliée audit cadre fixe par l'intermédiaire de moyens de guidage **(PG1, PG2, PG3, PG4)** aptes à guider ladite masse d'épreuve selon la direction dudit au moins un axe sensible. Sur les figures 1a et 1b, le dispositif est caractérisé par un seul axe sensible, dont la direction est parallèle à la direction de l'axe X. Lesdits moyens de guidage sont de préférence constitués d'un même matériau que ledit substrat, et sont reliés audit cadre fixe et à la masse d'épreuve **ME.** De préférence, lesdits moyens de guidage sont dimensionnés de telle sorte que leur raideur a peu d'impact sur la transmission d'une contrainte mécanique entre ladite masse d'épreuve et les autres éléments que comprend l'accéléromètre vibrant **1.**

Lesdits moyens de guidage sont, par exemple, des articulations mobiles permettant à **ME** de se déplacer par rapport au cadre fixe **C** et selon la direction de l'axe sensible lorsqu'une contrainte mécanique est appliquée au dispositif, en particulier lorsqu'une contrainte mécanique est appliquée à la masse d'épreuve **ME** selon la direction de l'axe sensible. Ces moyens de guidage permettent également de limiter les déplacements de la masse d'épreuve **ME** suivant les directions d'accélération autres que l'axe sensible. Comme représenté sur les figures 1a et 1b, un accéléromètre selon un mode de réalisation de l'invention peut comporter, en particulier, quatre poutres de guidage **PG1, PG2, PG3** et **PG4** reliant le cadre fixe **C** à la masse d'épreuve **ME.** Sur les figures 1a et 1b, les poutres **PG1, PG2, PG3** et **PG4** permettent également d'assurer un meilleur guidage de **ME** à proximité des quatre coins de **ME** suivant la direction de l'axe sensible.

On notera que la position des moyens de guidage n'est pas limitée par la présente description. En particulier, une poutre de guidage peut être reliée à la masse d'épreuve **ME** plus proche de son centre. Lors de la réalisation du dispositif, les moyens de guidage **(PG1, PG2, PG3, PG4)** peuvent éventuellement présenter une déformation initiale.

Comme représenté sur les figures 1a et 1b, un résonateur **R** est réalisé dans la couche nitrure **Nit1.** Ledit résonateur **R** peut présenter une forme choisie entre une poutre, une membrane, un disque ou encore une plaque. En particulier dans le présent exemple, le résonateur **R** est une poutre vibrante rectangulaire **P,** ladite poutre **P** étant encastrée d'un coté au cadre **C** en un ancrage **E1** et encastrée de l'autre coté à la masse d'épreuve en un ancrage **E2.** Selon un mode de réalisation de l'invention, lesdits ancrages **E1** et **E2** sont deux droites définies par l'intersection des plans de gravure du substrat et de la surface inférieure de la couche **Nit1.** Selon un mode de réalisation de l'invention, les ancrages **E1** et **E2** se situent sur les bords du substrat **Sub.**

Selon un mode de réalisation de l'invention, la couche **Nit1** peut comprendre une hétérostructure, ladite hétérostructure comprenant un gaz bidimensionnel de porteurs de charge, qui est situé dans les régions **G2DA** et **G2DD** à l'issue du procédé de fabrication. Lesdites régions sont situées dans la partie supérieure de la couche **Nit1** et à l'intérieur de celle-ci. Ladite hétérostructure peut, en particulier, former un transistor à effet de champ à haute mobilité électronique HEMT (pour *High-electron-mobility transistor* en anglais). Ladite hétérostructure permet, notamment, d'effectuer une détection électrique de vibrations mécaniques, et d'amplifier cette détection électrique. Les régions correspondant à ces gaz bidimensionnels de porteurs de charge, dont les contours sont représentés en pointillés sur la figure 1a, se situent sous le plan visible de ladite couche sur la figure 1b. Lesdites régions permettent de former au moins un canal de conduction à haute mobilité électronique dans la couche nitrure **Nit1**. Les propriétés connues en soi des gaz bidimensionnels de porteurs de charge permettent aux porteurs de charge se déplaçant dans lesdites régions de bénéficier d'une mobilité électronique significativement supérieure à celle des porteurs se déplaçant dans les autres parties de la couche **Nit1**. Il en résulte des performances plus importantes pour un accéléromètre selon l'un des modes de réalisation de l'invention.

Comme illustré sur les figures 1a et 1b, les régions **G2DA** et **G2DD** sont reliées électriquement à la surface du résonateur **R** par l'intermédiaire d'une électrode **COA**, ladite électrode traversant partiellement ou complètement la couche **Nit1**. Selon un mode de réalisation de l'invention, il est possible de réaliser ladite électrode **COA** sur la couche **Nit1** par diffusion et création d'alliages, ladite électrode formant un contact ohmique. Une telle électrode peut être obtenue, d'une manière connue en soi, en déposant du métal sur la surface supérieure de la couche **Nit1,** puis en chauffant l'ensemble de manière à faciliter la diffusion des atomes métalliques.

Comme représenté sur les figures 1a et 1b, un accéléromètre vibrant selon l'un des modes de réalisation de l'invention peut comporter un résonateur **R** situé dans la couche **Nit1,** disposé en contact avec le cadre fixe **C** en l'ancrage **E1** et avec la masse vibrante **ME** en l'ancrage **E2**. En particulier, un accéléromètre vibrant selon l'un des modes de réalisation de l'invention peut comporter également un transducteur permettant d'actionner le résonateur **R,** et/ou de détecter un signal électrique émis par celui-ci. En particulier, le résonateur **R** peut être relié à un ensemble d'éléments électroniques permettant son actionnement et/ou de mesurer au moins une de ses fréquences de résonance. Ledit transducteur peut comporter ainsi une électrode **COA,** une électrode **A,** et une région de la couche **Nit1** confinant un gaz bidimensionnel d'électrons, par exemple la région **G2DA**. L'intégration de l'électrode **A** peut se faire au moyen de différentes étapes de fabrication, incluant une ou plusieurs phases de dépôt

Selon un mode de réalisation de l'invention, ledit résonateur est apte à subir une tension ou une compression selon la direction de l'axe sensible de l'accéléromètre vibrant **1**. En particulier ledit résonateur est configuré pour osciller suivant un ensemble de fréquences propres de résonance. Les valeurs de ces fréquences propres dépendent de plusieurs paramètres, en particulier de l'épaisseur de la couche **Nit1** ou encore la distance séparant les ancrages **E1** et **E2**. Un choix particulier de ces paramètres peut être effectué pour fixer la sensibilité du dispositif **1** pour une mesure plus ou moins précise d'accélérations.

Selon un mode de réalisation de l'invention, ledit résonateur est réalisé dans le même matériau que celui constituant la couche nitrure **Nit1**. Selon un mode de réalisation de l'invention, le résonateur **R** présente une longueur comprise typiquement entre 100 et 500 microns, en particulier 390 microns, et une épaisseur comprise typiquement entre 0,5 et 10 microns, en particulier 2 microns.

Lorsque l'accéléromètre **1** subit une accélération suivant un axe sensible, une force d'inertie est appliquée sur la masse d'épreuve **ME**. La masse d'épreuve **ME** subit alors un déplacement par rapport au cadre fixe **C** dans une direction parallèle à celle de l'axe sensible, appliquant à la couche **Nit1,** et donc au résonateur **R,** une contrainte mécanique. Ladite contrainte mécanique peut être une contrainte de compression ou de tension. Sous l'effet de l'application d'une contrainte mécanique, le résonateur **R** évalue l'accélération correspondante au déplacement de la masse d'épreuve **ME.** On remarquera que si la contrainte mécanique est une contrainte de compression appliquée par la masse d'épreuve **ME** sur la couche **Nit1,** et donc sur le résonateur **R,** ledit résonateur peut subir un flambage. Ce flambage peut mener à la rupture dudit résonateur. Le flambage et la rupture d'un matériau dépendent de différents paramètres, dont ses propriétés intrinsèques. Pour un résonateur constitué d'une poutre réalisée en un matériau semi-conducteur, la limite de rupture est généralement de l'ordre d'un giga-pascal.

Lorsqu'une contrainte et/ou une précontrainte en compression ou en tension lui est appliquée, le résonateur **R** voit sa structure se déformer de façon à ce qu'au moins une fréquence propre de résonance le caractérisant varie en fonction de l'accélération correspondante. Ainsi, en mesurant la variation de la fréquence propre du résonateur, il est possible d'en déduire l'intensité et le sens de l'accélération suivant l'axe sensible.

Selon un mode de réalisation de l'invention, l'accéléromètre **1** peut comporter, en outre, un transistor à effet de champ. Ledit transistor à effet de champ permet par exemple de détecter les vibrations du résonateur **R,** et/ou d'amplifier un signal électrique généré par ledit résonateur. Les électrodes dudit transistor, appelées drain **D,** source **S** et grille **G,** sont réalisées sur la partie supérieure de la couche **Nit1**. Typiquement, les électrodes **S, G** et **D** sont disposées de sorte à être reliées avec la région **G2DD** confinée dans la couche **Nit1**.

Les contacts **S** et **D** de ce transistor peuvent être réalisés par dépôt d'un métal comme du titane, de l'aluminium. Ce dépôt peut être suivi d'une étape de recuit pour permettre la diffusion des dopants dans le matériau semi-conducteur.

De préférence, ces étapes sont réalisées de sorte à ce que le ou les contacts formés soient caractérisés par une très faible résistivité. La minimisation de la résistivité électrique de ces contacts permet de faciliter l'injection et/ou l'extraction d'un courant électrique dans le dispositif. Lesdits contacts sont des contacts ohmiques.

L'électrode de grille **G**, éventuellement constituée d'un matériau différent de celui constituant les contacts **S** et **D,** s'étend sur une surface de la couche **Nit1**. Ladite électrode permet de moduler le passage du courant dans les canaux de conduction des régions **G2DD** et **G2DA**. L'électrode **G** est connectée électriquement à la couche **Nit1**. L'ensemble de ces électrodes permet, par exemple, d'injecter un courant électrique dans le transducteur. On remarquera que la position des électrodes d'un tel transistor n'est pas limitée par la présente description. En particulier, une disposition des électrodes peut être réalisée de sorte à ce que lesdites électrodes soient connectées à au moins un transistor situé sur la couche **Nit1,** mais pas au sur le résonateur **R.**

Selon un mode de réalisation de l'invention, l'accéléromètre **1** peut comporter un dipôle résistif.

A titre non limitatif, un dipôle résistif de l'accéléromètre **1** peut être formé à partir des électrodes **S** et **D**. Par exemple, les électrodes **S** et **D** peuvent former les bornes de ce dipôle résistif tandis que l'électrode de grille **G** n'est pas utilisée.

Selon un mode de réalisation de l'invention, le dipôle résistif est une résistance variable comprenant une pluralité d'électrodes (**D**, **S**) situées sur la couche **Nit1,** ces électrodes étant connectées électriquement à l'hétérostructure.

Avantageusement, la présence d'un dipôle résistif permet de former un transducteur piézorésistif pour réaliser une jauge à résistance variable.

Lorsque l'accéléromètre **1,** le transducteur ou l'un des composants du transducteur comme le résonateur **R** est soumis à une contrainte, une variation de résistance apparaît aux bornes du dipôle résistif, par exemple aux bornes des électrodes **S** et **D**. Cette variation de résistance résulte de la variation de la fréquence d'oscillation du dispositif, par exemple en raison de la contrainte ou d'une variation de résistivité dans l'une des couches du dispositif.

Avantageusement, une mesure précise de la variation de la fréquence d'oscillation du dispositif est réalisable au moyen d'une mesure de la variation de résistance aux bornes du dipôle résistif.

Selon un mode de réalisation de l'invention, ledit dipôle résistif peut être une résistance variable, par exemple une piézorésistance variable. A titre non limitatif, la valeur de la résistance de ce dipôle résistif peut être supérieure à 50 ohms et inférieure à 10 kilo-ohms.

Selon un mode de réalisation de l'invention, la couche **Nit1** est constituée d'un matériau précontraint. Ledit matériau est, en particulier, précontraint en tension sur le substrat **Sub**. Cette précontrainte peut être obtenue à partir de la réalisation de la couche **Nit1** à l'aide d'une croissance par épitaxie à haute température, notamment entre 800 et 1000°C, à partir du substrat **Sub**. En particulier, la couche **Nit1** et la couche **Sub** peuvent être réalisées en des matériaux comprenant des cristaux caractérisés par un paramètre de maille. En particulier, les matériaux constituants la couche **Nit1** et le substrat **Sub** peuvent être des cristaux ayant un paramètre de maille différent. Ceci a pour effet de créer une précontrainte, ou plus généralement une contrainte, lors de la réalisation de la croissance. Cette contrainte peut, en particulier, être une contrainte en tension. Il convient également de noter qu'une partie d'une contrainte en tension peut résulter du fait que les matériaux constituant la couche **Nit1** et la couche **Sub** possèdent un coefficient de dilatation thermique différent. A la fin de la croissance, une mise à température ambiante du dispositif permet de générer une contrainte en tension, notamment une précontrainte en tension.

Avantageusement, la présence d'une précontrainte en tension dans la couche **Nit1** permet d'améliorer les performances d'un accéléromètre vibrant. De manière surprenante, les inventeurs ont découvert que la réalisation d'un accéléromètre vibrant comprenant une couche nitrure précontrainte en tension possède de meilleures performances qu'un accéléromètre selon l'état de la technique. En particulier, les inventeurs ont constaté qu'imposer une précontrainte en tension augmente l'étendue de mesure des accélérations mesurées par un tel accéléromètre. Ladite étendue de mesure peut se définir comme la largeur de l'intervalle **[-a, +a]** des accélérations mesurables comprises entre la plus petite accélération **-a** mesurable par l'accéléromètre et la plus grande accélération **+a** mesurable par celui-ci. Avantageusement, l'étendue de mesure d'un accéléromètre selon l'un des modes de réalisation de l'invention, en particulier un accéléromètre comprenant une poutre vibrante avec les mêmes caractéristiques que celles décrites ci-dessus, est de l'ordre de 1115 g en présence d'une précontrainte en tension de 70 Méga Pascals, soit une amélioration de plus d'un facteur 4 de l'étendue de mesure correspondante par rapport à un accéléromètre n'étant pas précontraint. De plus, il est observé que le facteur de qualité d'un tel résonateur précontraint augmente considérablement lorsque la précontrainte appliquée est plus importante. De même, la présence d'une précontrainte en tension dans la couche **Nit1** permet de réaliser un accéléromètre présentant une meilleure résolution qu'en l'absence de précontrainte.

Selon l'état de la technique, l'utilisation de matériaux différents pour réaliser le substrat et le résonateur d'un accéléromètre crée des dérives d'origine thermiques susceptibles d'affecter la précision des mesures obtenues. Il est ainsi généralement admis que les performances d'un accéléromètre comprenant des matériaux différents pour former le substrat **Sub** et la couche nitrure **Nit1** sont peu avantageuses. De manière surprenante, les inventeurs ont découvert qu'un accéléromètre caractérisé par un substrat **Sub** et une couche **Nit1** réalisés dans des matériaux différents pouvait toute de même présenter de meilleures performances qu'un accéléromètre où ces matériaux sont identiques, par exemple lorsque la masse d'épreuve **ME** et le résonateur **R** sont fabriqués dans un même matériau.

En particulier, ledit substrat peut être constitué de silicium Si ou de carbure de silicium SiC. Selon un mode de réalisation de l'invention, la couche **Nit1** peut, en particulier, contenir une couche de SiC. Selon un autre mode de réalisation de l'invention, le substrat **Sub** peut être une couche active d'un substrat de type silicium sur isolant. De préférence, la couche **Nit1** est réalisée en un matériau de type III-N, l'élément du groupe III pouvant être de l'aluminium Al, du gallium Ga, de l'indium In, du bore B, ou encore un alliage de ces éléments. De préférence, la couche **Nit1** est réalisée en GaN. Les inventeurs ont constaté que la réalisation d'un accéléromètre présentant au moins une couche semi-conductrice en GaN permet le fonctionnement d'un accéléromètre vibrant précontraint à de plus hautes températures. De plus, un dispositif comprenant une ou plusieurs couches de GaN permet l'intégration d'une électronique plus résistante aux environnements sévères. En outre, un tel dispositif permet d'intégrer de façon monolithique des transistors d'amplification à proximité de l'accéléromètre. En particulier, on notera que le substrat **Sub** peut également comporter un ou plusieurs transistors situés sur la masse d'épreuve **ME** ou à proximité de celle-ci. Ce ou ces transistors ont, typiquement, un canal de conduction situé dans la couche nitrure **Nit1,** au moins l'un de ces transistors étant connectés électriquement au résonateur R pour permettre la mesure d'un signal électrique généré par ledit résonateur.

Avantageusement, les caractéristiques décrites précédemment, notamment la présence d'une couche nitrure **Nit1** précontrainte, permet au dispositif d'atteindre des étendues de mesures supérieures, et des bandes passantes de mesure plus grandes, comparativement aux dispositifs connus de l'état de la technique. Ces performances améliorées peuvent être décrites à l'aide d'un facteur, le facteur d'échelle $K_n$, qui caractérise la sensibilité du capteur à une accélération. Cette sensibilité peut être exprimée en fonction de la précontrainte de la couche **Nit1,** et en fonction de la fréquence $f_n$ du n-ième mode de flexion, dit également n-ième mode de vibration.

Selon les inventeurs, la résolution d'un accéléromètre vibrant est proportionnelle à la quantité $\frac{f_n}{2Q_nK_n}$, où $Q_n$ désigne le facteur de qualité de l'accéléromètre vibrant. Ainsi, le facteur de qualité $Q_n$ augmente en présence d'une contrainte. De plus, on remarquera que la résolution d'un accéléromètre vibrant est faiblement modifiée en présence d'une contrainte pour le mode de vibration fondamental, ou en l'absence d'une contrainte pour le mode de vibration fondamental. Cependant, la résolution d'un accéléromètre vibrant augmente fortement en cas d'utilisation des modes de résonance plus élevés. Qui plus est, la réalisation de la masse d'épreuve **ME** sur toute l'épaisseur du substrat **Sub** permet d'obtenir une masse importante, liée à une poutre de faible section, ce qui améliore directement la résolution.

L'étendue de mesure d'un dispositif selon un mode de réalisation de l'invention est limitée par le flambage, et dépend de la force maximale applicable à la poutre. L'accélération maximale est ainsi mesurable de manière plus avantageuse en présence d'un précontrainte $\sigma_0$ qu'en l'absence de précontrainte, c'est-à-dire lorsque $\sigma_0$=0. Le module d'Young du nitrure de gallium est plus élevé que celui des matériaux classiques tels que le silicium ou le quartz. Il en découle que l'étendue de mesure d'un dispositif à base de nitrure de gallium est plus grande que celle d'un dispositif à base de silicium ou de quartz. De plus, la présence d'une précontrainte permet d'augmenter considérablement cette étendue de mesure, pouvant atteindre des valeurs 5 à 10 fois plus élevées qu'un dispositif non précontrainte. Des valeurs plus élevées peuvent également être atteintes en fonction des dimensions de la poutre.

Les inventeurs ont ainsi montré qu'en l'absence de toute précontrainte, l'étendue de mesure d'un accéléromètre comprenant pour résonateur une poutre vibrante en GaN de dimensions 390μm x 20μm x 1.8μm était de l'ordre de 244 g, lorsque ladite poutre était soumise à une précontrainte en tension de 70MPa. Les colonnes du tableau ci-dessous présentent les résultats correspondant aux fréquences $f_n$ (en kHz), aux facteur d'échelle $K_n$ (en Hz par unités de g) et aux étendues de mesure (en unités de g) pour différents modes de vibration d'un dispositif tel que décrit, sans précontrainte et en présence d'une précontrainte égale à 70MPa :

| | sans précontrainte ($\sigma_0$=0) | | | avec précontrainte ($\sigma_0$=70MPa) | | |
|---|---|---|---|---|---|---|
| Indice du mode | 1 | 2 | 3 | 1 | 2 | 3 |
| $f_n$ (kHz) | 82 | 226 | 444 | 173 | 372 | 620 |
| $K_n$ (Hz/g) | 163 | 222 | 243 | 77 | 135 | 174 |
| Etendue de mesure (g) | 244 | | | 1115 | | |

Comme indiqué par ces résultats, la présence d'une précontrainte permet d'atteindre des étendues de mesures supérieures. De plus, les fréquences $f_n$ sont plus élevées lorsque $\sigma_0$ égale 70 MPa plutôt que zéro, ce qui permet d'envisager des bandes passantes de mesure plus grandes. On comprendra que ceci est vrai en général lorsque $\sigma_0$ est non-nul.

Selon un mode de réalisation de l'invention, l'utilisation de matériaux différents et la réalisation d'une précontrainte en tension du matériau composant la couche **Nit1** permet donc de réaliser un résonateur **R** possédant un meilleur facteur de qualité, une plus large étendue de mesure ainsi qu'une résolution accrue vis-à-vis d'accéléromètres issus de l'état de la technique. De plus, il est constaté par les inventeurs qu'une précontrainte en tension du matériau composant la couche nitrure **Nit1** permet de prévenir le phénomène de flambage de du résonateur **R**. En d'autres termes, la valeur de la contrainte mécanique minimale devant être appliquée audit résonateur pour provoquer un flambage de celui-ci est modifiée en une valeur plus avantageuse lorsque la couche **Nit1** est initialement précontrainte en tension lors de la réalisation de l'empilement de couches.

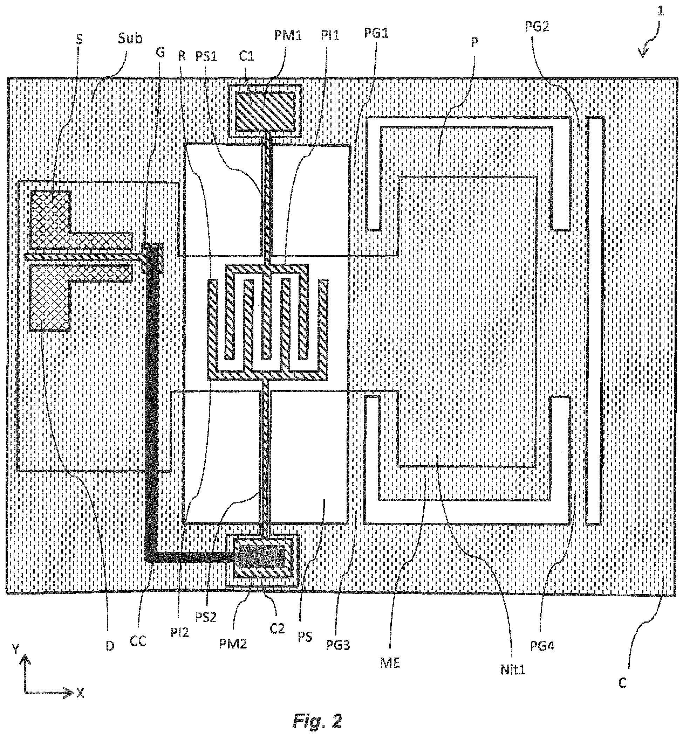

On notera ici que la présente invention ne se limite pas au cas d'une poutre vibrante. La figure 2 illustre une vue en plan d'un accéléromètre vibrant précontraint selon un deuxième exemple de réalisation de l'invention. En particulier, la présente invention peut se rapporter à un accéléromètre vibrant précontraint en tension, comportant une plaque vibrante **PS** apte à détecter une accélération selon au moins un axe sensible. Selon un mode de réalisation de l'invention, ledit accéléromètre vibrant peut comporter des éléments, notamment ladite plaque vibrante, agencés pour détecter une accélération selon un axe sensible, notamment orienté dans la direction X.

Selon un mode de réalisation de l'invention, ladite plaque vibrante est précontrainte en tension. Lorsqu'une contrainte mécanique provoque le déplacement de la masse d'épreuve **ME** dans le plan formé par la direction X, ce déplacement peut être détecté à l'aide d'un résonateur **R** pouvant être contraint mécaniquement suivant la même direction X. En particulier, **R** possède au moins un mode de vibration caractérisé par une fréquence propre pouvant être modifiée sous l'effet d'une déformation suivant la direction X. Selon un mode de réalisation de l'invention, un résonateur **R** compris dans ladite plaque vibrante est caractérisé par une ou plusieurs fréquences de résonance correspondant aux modes de vibrations de ladite plaque. Lesdits modes de vibrations dits de plaque sont obtenus grâce à différentes conditions aux limites, lesdites conditions aux limites dépendant des dimensions et des formes possibles de la couche **Nit1**. Le peigne **PI1** est utilisé pour actionner l'accéléromètre vibrant. Les modes de vibration sont détectés à l'aide du peigne inter-digité **PI2** localisé sur le résonateur **R**. D'autres électrodes non représentées sur la figure 2 peuvent également être intégrées afin de définir une masse électrique. Lesdits peignes inter-digités sont reliés à des plots de contact situés sur le cadre fixe **C** par l'intermédiaire de pistes de métal **PM1** et **PM2**. Lesdites pistes s'étendent au moins partiellement sur des ponts **PS1** et **PS2** qui sont de préférence constitués du matériau de la couche **Nit1**. Selon un mode de réalisation de l'invention, les pistes **PM1** et **PM2** sont disposées sur des portions de la couche **Nit1** et rejoignant les plots situés sur le cadre **C**.

Selon un mode de réalisation de l'invention, l'une des deux électrodes, par exemple l'électrode **C2**, peut être en contact avec la grille **G** d'un transistor par l'intermédiaire d'une connexion électrique **CC**, ledit transistor à effet de champ étant formé par un ensemble d'électrodes (**S**, **G** et **D**) comme décrit précédemment.

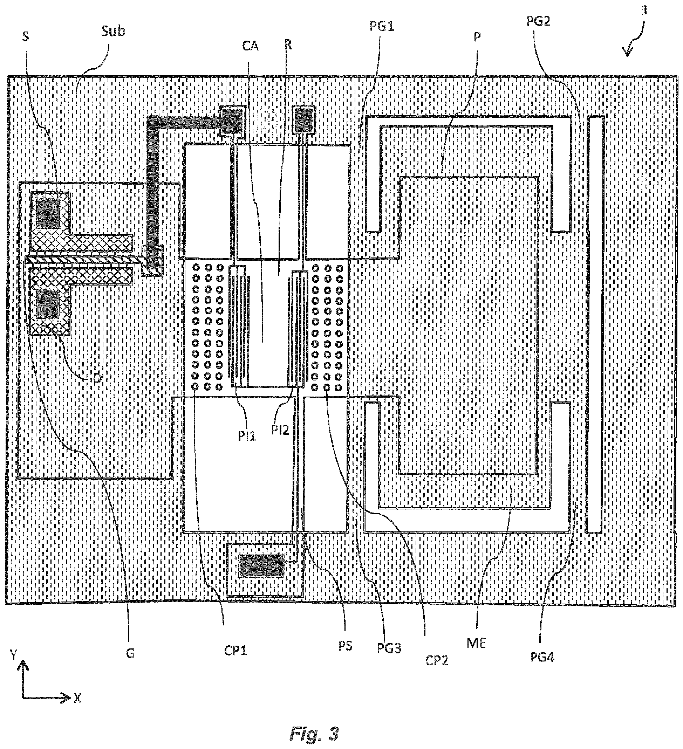

La figure 3 représente une vue en plan d'un accéléromètre vibrant précontraint en tension selon un troisième exemple de réalisation de l'invention. Comme illustré, ce mode de réalisation de l'invention peut se rapporter à un accéléromètre vibrant précontraint, comportant une plaque vibrante **PS** apte à détecter une accélération suivant un ou plusieurs axes sensibles. Cet exemple de réalisation comporte un ensemble d'éléments semblables aux modes de réalisation précédemment décrits, en ce compris un résonateur **R**. De plus, cet exemple de réalisation de l'invention peut comporter un cavité acoustique **CA**. Ladite cavité acoustique peut, en particulier, être une cavité d'ondes résonnantes formant un espace capacitif. Avantageusement, cet exemple de réalisation permet d'améliorer la sensibilité du résonateur **R**, et donc de l'accéléromètre vibrant. La cavité acoustique peut aussi, par exemple, être définie par deux cristaux phononiques **CP1** et **CP2**, ainsi que deux séries de peignes interdigités **PI1** et **PI2**. Ladite cavité acoustique peut être définie par des miroirs acoustiques formés par un réseau de trous situés dans la couche **Nit1**. En réponse à une accélération le long d'un axe sensible dirigé dans la direction X , la masse d'épreuve **ME** applique une contrainte mécanique sur la plaque vibrante **PS**, et modifie les dimensions de ladite cavité. Les fréquences propres de résonance du résonateur **R** peuvent ainsi varier sous l'effet de ces modifications de dimensions. La variation desdites fréquences propres peut alors être utilisée pour déterminer avec plus grande précision l'accélération à laquelle le dispositif est soumis. De plus, des peignes inter-digités **PI1** et **PI2** peuvent se situer sur les bords de la cavité acoustique **CA** tels que précédemment décrits. Ces caractéristiques permettent d'améliorer la sensibilité et les performances d'un accéléromètre vibrant selon les modes de réalisation de l'invention tels que décrits précédemment.

**Revendications**

**1.** Dispositif de mesure d'une accélération **caractérisé en ce qu'**il comporte un accéléromètre vibrant comprenant :

  - un substrat (Sub) constitué d'un matériau semi-conducteur et formant un cadre fixe (C) dudit accéléromètre;
  - une masse d'épreuve (ME) constituée d'un même matériau que ledit substrat et reliée audit cadre fixe, ladite masse d'épreuve étant apte à se déplacer en translation suivant au moins un axe sensible dudit accéléromètre vibrant;

- des moyens de guidage (PG1, PG2, PG3, PG4) constitués d'un même matériau que ledit substrat, et reliés audit cadre fixe et à ladite masse d'épreuve, lesdits moyens de guidage étant aptes à guider ladite masse d'épreuve selon la direction dudit au moins un axe sensible;

- une couche (Nit1) constituée d'un matériau semi-conducteur piézoélectrique et déposée sur ledit substrat, ladite couche étant précontrainte en tension;

- un résonateur (R) situé dans ladite couche et relié audit cadre fixe, ledit résonateur étant apte à subir une tension ou une compression selon la direction dudit au moins un axe sensible; et

- au moins un transducteur relié audit résonateur, ledit au moins transducteur étant apte à actionner ledit résonateur, à maintenir une oscillation dudit résonateur et/ou à détecter un signal électrique généré par ledit résonateur.

2. Dispositif selon la revendication 1, **caractérisé en ce que** ledit substrat est une couche active d'un substrat de silicium sur isolant.

3. Dispositif selon la revendication 1 ou 2, **caractérisé en ce que** ladite couche est réalisée en un matériau différent du substrat, en particulier un matériau nitrure de type III-N, l'élément du groupe III étant choisi parmi Al, Ga, In, B ou tout alliage de ces éléments, de préférence Ga.

4. Dispositif selon l'une quelconque des revendications précédentes, **caractérisé en ce que** ledit résonateur comporte une épaisseur comprise entre 0.5 microns et 10 microns.

5. Dispositif selon l'une quelconque des revendications précédentes, **caractérisé en ce que** ledit transducteur comporte une hétérostructure confinant dans ladite couche au moins un gaz bidimensionnel de porteurs de charge dans une pluralité de régions (G2DA, G2DD), ledit au moins un gaz bidimensionnel formant au moins un canal de conduction électrique s'étendant dans ladite couche, ledit au moins un canal de conduction électrique étant connecté électriquement à ladite couche.

6. Dispositif selon la revendication précédente, **caractérisé en ce que** ledit transducteur comporte une résistance variable, ladite résistance variable comprenant une pluralité d'électrodes (D, S) situées sur ladite couche, et connectées électriquement à ladite hétérostructure.

7. Dispositif selon la revendication 5 ou 6, **caractérisé en ce que** ledit transducteur comporte un transistor, ledit transistor comprenant une pluralité d'électrodes (G, D, S) situées sur ladite couche, et connectées électriquement à ladite hétérostructure.

8. Dispositif selon la revendication précédente, **caractérisé en ce que** au moins une desdites électrodes dudit transistor est un contact ohmique.

9. Dispositif selon l'une quelconque des revendications précédentes, **caractérisé en ce que** ledit transducteur comprend une pluralité d'électrodes (A, COA), au moins deux desdites électrodes étant connectées à ladite couche et/ou à un gaz bidimensionnel de porteurs de charge.

10. Dispositif selon l'une quelconque des revendications précédentes, **caractérisé en ce que** ledit résonateur comporte une pluralité de peignes inter-digités (PI1, PI2), lesdits peignes inter-digités étant connectés électriquement audit résonateur et à une pluralité d'électrodes (C1, C2) formées sur ledit cadre fixe par une pluralité de pistes (PM1, PM2), lesdites pistes étant constituées d'un matériau en métal ou en semi-conducteur.

11. Dispositif selon l'une quelconque des revendications précédentes, **caractérisé en ce que** ledit résonateur est encastré sur une partie de son périmètre et présente une forme choisie entre :

- une poutre ;
- une membrane ;
- un disque ; et
- une plaque.

12. Dispositif selon l'une quelconque des revendications précédentes, **caractérisé en ce que** ledit résonateur comporte une cavité acoustique (CA), ladite cavité acoustique comprenant des cristaux phononiques (CP1, CP2).

**Patentansprüche**

1. Vorrichtung zur Messung einer Beschleunigung, **dadurch gekennzeichnet, dass** sie einen vibrierenden Beschleunigungsmesser umfasst, welcher enthält:

   - ein Substrat (Sub), das aus einem Halbleitermaterial besteht und einen festen Rahmen (C) für den Beschleunigungsmesser bildet;
   - eine Prüfmasse (ME), die aus einem gleichen Material wie das Substrat besteht und mit dem festen Rahmen verbunden ist, wobei die Prüfmasse in mindestens einer Messachse des vibrierenden Beschleunigungsmessers verschiebbar beweglich ist;
   - Führungseinrichtungen (PG1, PG2, PG3, PG4), die aus einem gleichen Material wie das Substrat bestehen und mit dem festen Rahmen und der Prüfmasse verbunden sind, wobei die Führungseinrichtungen dazu geeignet sind, die Prüfmasse entsprechend der Richtung der mindestens einen Messachse zu führen;
   - eine Schicht (Nit1), die aus einem piezoelektrischen Halbleitermaterial besteht und auf dem Substrat aufgetragen ist, wobei die Schicht vorgespannt ist;
   - einen Resonator (R), der in der Schicht gelagert und mit dem festen Rahmen verbunden ist, wobei der Resonator dazu geeignet ist, mit einer Spannung oder einem Druck entsprechend der Richtung der mindestens einen Messachse beaufschlagt zu werden; und
   - mindestens einen mit dem Resonator verbundenen Signalwandler, wobei der mindestens eine Signalwandler dazu geeignet ist, den Resonator zu tätigen, den Resonator in Schwingung zu halten und/oder einen durch den Resonator ausgelösten elektrischen Signal zu erkennen.

2. Vorrichtung nach Anspruch 1, **dadurch gekennzeichnet, dass** das Substrat eine aktive Schicht eines Siliciumsubstrats auf Isolierung ist.

3. Vorrichtung nach Anspruch 1 oder 2, **dadurch gekennzeichnet, dass** die Schicht aus einem anderen Material als das Substrat, insbesondere aus einem III-N-Nitrid-Material besteht, wobei das Element der Gruppe III unter Al, Ga, In, B oder einer beliebigen Verbindung dieser Elemente, vorzugsweise Ga ausgesucht wird.

4. Vorrichtung nach einem der vorhergehenden Ansprüche, **dadurch gekennzeichnet, dass** der Resonator eine Dicke zwischen 0,5 $\mu$m und 10 $\mu$m aufweist.

5. Vorrichtung nach einem der vorhergehenden Ansprüche, **dadurch gekennzeichnet, dass** der Signalwandler eine Heterostruktur enthält, wobei in der Schicht mindestens ein zweidimensionales Gas von Ladungsträgern in einer Vielzahl von Bereichen (G2DA, G2DD) eingeschlossen ist, wobei das mindestens eine zweidimensionale Gas mindestens eine sich in der Schicht erstreckende elektrische Leitungsbahn bildet, wobei die mindestens eine elektrische Leitungsbahn mit der Schicht elektrisch verbunden ist.

6. Vorrichtung nach dem vorhergehenden Anspruch, **dadurch gekennzeichnet, dass** der Signalwandler einen veränderlichen Widerstand enthält, wobei der veränderliche Widerstand eine Vielzahl von auf der Schicht gelagerten Elektroden (D, S) umfasst, welche mit der Heterostruktur elektrisch verbunden sind.

7. Vorrichtung nach Anspruch 5 oder 6, **dadurch gekennzeichnet, dass** der Signalwandler einen Transistor enthält, wobei der Transistor eine Vielzahl von auf der Schicht gelagerten Elektroden (G, D, S) umfasst, welche mit der Heterostruktur elektrisch verbunden sind.

8. Vorrichtung nach dem vorhergehenden Anspruch, **dadurch gekennzeichnet, dass** mindestens eine der Elektroden des Transistors ein ohmscher Kontakt ist.

9. Vorrichtung nach einem der vorhergehenden Ansprüche, **dadurch gekennzeichnet, dass** der Signalwandler eine Vielzahl von Elektroden (A, COA) enthält, wobei mindestens zwei der Elektroden mit der Schicht und/oder mit einem zweidimensionalen Gas von Ladungsträgern verbunden sind.

10. Vorrichtung nach einem der vorhergehenden Ansprüche, **dadurch gekennzeichnet, dass** der Resonator eine Vielzahl von Interdigitalkämmen (PI1, PI2) enthält, wobei die Interdigitalkämme mit dem Resonator und einer Vielzahl von durch eine Vielzahl von Bahnen (PM1, PM2) auf dem festen Rahmen gebildeten Elektroden (C1, C2) elektrisch verbunden sind, wobei die Bahnen aus einem Material aus Metall oder aus einem Halbleitermaterial bestehen.

**11.** Vorrichtung nach einem der vorhergehenden Ansprüche, **dadurch gekennzeichnet, dass** der Resonator auf einem Teil seines Umfangs eingebaut ist und eine unter folgenden Formen ausgesuchte Form aufweist:

- eines Trägers;
- einer Membran;
- einer Scheibe; und
- einer Platte.

**12.** Vorrichtung nach einem der vorhergehenden Ansprüche, **dadurch gekennzeichnet, dass** der Resonator einen akustischen Hohlraum (CA) enthält, wobei der akustische Hohlraum phononische Kristalle (CP1, CP2) enthält.

**Claims**

**1.** Device for measuring an acceleration **characterized in that** it includes a vibrating accelerometer comprising:

- a substrate (Sub) constituted by a semiconductor material and forming a fixed framework (C) of said accelerometer;
- a test mass (ME) constituted by one and the same material as said substrate and connected to said fixed framework, said test mass being capable of translating along at least one sensitive axis of said vibrating accelerometer;
- guiding means (PG1, PG2, PG3, PG4) constituted by one and the same material as said substrate and connected to said fixed framework and to said test mass, said guiding means being capable of guiding said test mass in the direction of said at least one sensitive axis;
- a layer (Nit1) constituted by a piezoelectric semiconductor material and deposited on said substrate, said layer being prestressed in tension;
- a resonator (R) located in said layer and connected to said fixed framework, said resonator being capable of undergoing tension or compression in the direction of said at least one sensitive axis; and
- at least one transducer connected to said resonator, said at least one transducer being capable of actuating said resonator, keeping said resonator oscillating and/or detecting an electrical signal generated by said resonator.

**2.** Device according to claim 1, **characterized in that** said substrate is an active layer of a silicon-on-insulator substrate.

**3.** Device according to claim 1 or 2, **characterized in that** said layer is made from a material different from the substrate, particularly a III-N (nitride) type material, the group III element being chosen from Al, Ga, In, B or any alloy of these elements, preferably Ga.

**4.** Device according to any one of the preceding claims, **characterized in that** said resonator comprises a thickness comprised between 0.5 microns and 10 microns.

**5.** Device according to any one of the preceding claims, **characterized in that** said transducer includes a heterostructure confining in said layer at least one two-dimensional charge carrier gas in a plurality of regions (G2DA, G2DD), said at least one two-dimensional gas forming at least one electrically conductive channel extending in said layer, said at least one electrically conductive channel being electrically connected to said layer.

**6.** Device according to the preceding claim, **characterized in that** said transducer includes a variable resistor, said variable resistor comprising a plurality of electrodes (D, S) located on said layer, and electrically connected to said heterostructure.

**7.** Device according to claim 5 or 6, **characterized in that** said transducer includes a transistor, said transistor comprising a plurality of electrode (G, D, S) located on said layer, and electrically connected to said heterostructure.

**8.** Device according to the preceding claim, **characterized in that** at least one of said electrodes of said transistor is an ohmic contact.

**9.** Device according to any one of the preceding claims, **characterized in that** said transducer comprises a plurality of electrodes (A, COA), at least two of said electrodes being connected to said layer and/or to a two-dimensional charge carrier gas.

10. Device according to any one of the preceding claims, **characterized in that** said resonator includes a plurality of interdigitated combs (PI1, PI2), said interdigitated combs being electrically connected to said resonator and to a plurality of electrodes (C1, C2) formed on said fixed framework by a plurality of tracks (PM1, PM2), said tracks being constituted by a metal or semiconductor material.

11. Device according to any one of the preceding claims, **characterized in that** said resonator is embedded on a portion of its perimeter and has the form of either:

- a beam;
- a membrane;
- a disk; or
- a plate.

12. Device according to any one of the preceding claims, **characterized in that** said resonator includes an acoustic cavity (CA), said acoustic cavity comprising phononic crystals (CP1, CP2).

Fig. 1a

Fig. 1b

13

*Fig. 2*

Fig. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R. E. HOPKINS ; J. T. BORENSTEIN ; B. M. ANTKOWIAK ; P. A. WARD ; R. D. ELLIOT ; M. S. WEINBERG ; M. D. DEPIERO ; J. A. MIOLA.** *The Silicon Oscillating Accelerometer: A MEMS Inertial Instrument for Strategic Missile Guidance,* 2000, 44-51